# EUROPEAN PATENT SPECIFICATION

(11) **EP 3 931 403 B1**
(45) Date of publication and mention of the grant of the patent: **17.01.2024**
(21) Application number: 20707848.6
(22) Date of filing: 21.02.2020
(51) Int. Cl.: E03C 1/298

(54) **STENCH TRAP WITH FLAP VALVE**
GERUCHSVERSCHLUSS MIT EINEM FLEXIBLEN KLAPPVENTIL
SIPHON ANTI-ODEUR AVEC CLAPET FLEXIBLE

(30) Priority: 25.02.2019 NL 2022631
(43) Date of publication of application: 05.01.2022
(73) Proprietor: Easy Sanitary Solutions B.V., 7575 BK Oldenzaal (NL)
(72) Inventor: KEIZERS, Jurgen Hendrik Peter Joseph, 7575 BK Oldenzaal (NL)
(74) Representative: Patentanwälte Ruff, Wilhelm, Beier, Dauster & Partner mbB
(86) International application number: PCT/NL2020/050107
(87) International publication number: WO 2020/175982

(56) References cited:
- DE-A1-102014 014 653
- GB-A- 2 449 364
- KR-A- 20110 015 952

## Description

The invention relates to a stench trap according to the preamble of claims 1 and 4.

Such a stench trap is for instance known from DE10 2014014653.

EP 1627968 describes a stench trap which can be placed in an outlet pipe and seals with the seal against the inner wall of the outlet pipe.

The stench trap however has a usual siphon structure, wherein the channel from the inflow opening to the outflow opening has a U-shape. Dirt can hereby easily remain behind in the U-shaped channel, and hair can easily become caught on the edge of the outflow opening.

In addition, a U-shaped channel is difficult to clean, whereby keeping such a stench trap clean is laborious, and an unpleasant activity.

Known stench traps, which make use of a siphoning action, further have the drawback that the water in the U-shaped channel can dry up, whereby the stench-trapping action is lost. In order to ensure sufficient reliability of the stench-trapping action, the U-shaped channel must therefore have a certain height, for instance a minimum of 5 centimetres, which has an adverse effect on the overall height of the stench trap.

It is an object of the invention to reduce or even obviate the above stated drawbacks.

This object is achieved according to the invention with a stench trap according to claims 1 and 4.

By arranging a closing surface around the outflow opening and by closing the outflow opening with a flexible flap it is no longer necessary to have a U-shaped channel in the stench trap. This increases the throughflow through the stench trap, and dirt and hair will remain in the stench trap to lesser extent, whereby the stench trap is easier to clean.

Furthermore, no residual water remains in the stench trap and the evaporation of water will not influence the stench trapping. The height of the channel hereby no longer defines a good stench trapping either, as it does in conventional stench traps based on siphoning action.

When underpressure is created in the sewer, the stench trap according to the invention also provides for a good ventilation in that the flexible flap is sucked open in simple manner. In the case of a stench trap with a water seal this is usually not possible due to the amount of water present in the U-shaped channel.

As soon as the underpressure is equalized, the flexible flap will automatically close the outflow opening again.

By choosing a sufficiently large closing surface it is further possible to ensure that the stench trap according to the invention can withstand a sufficiently great overpressure in the sewer. With a stench trap according to the invention it is thus very simple to withstand overpressures of more than 400 Pascal.

Because the stench trap is further provided with a seal enclosing the peripheral surface, the stench trap can easily be removed from an outlet pipe or housing for cleaning, but it is hereby also possible to replace a conventional stench trap with a stench trap according to the invention.

In the stench trap according to the first aspect of the present invention the closing surface is a surface with a curve in a single direction, which surface with a curve in a single direction is parallel to the edge with which the flexible flap is fastened to the body.

The closing surface is preferably concave.

Because the closing surface is curved, the flexible flap will lie against the closing surface under tension and thereby provide an improved closure. Even when the flap has lost some flexibility after many years due to deterioration of the material, the flexible flap will be forced by the curved closing surface to lie in good contact and to provide a good seal.

In a further preferred embodiment of the stench trap according to the invention the closing surface runs substantially vertically close to the edge of the flexible flap, which is fastened to the body, and the closing surface has at least a horizontal directional component at a greater distance from the edge of the flexible flap, which is fastened to the body.

The flexible flap will thus run downward from a vertical direction and herein curve toward a more horizontal direction. Each part of the flexible flap will hereby have a small horizontal directional component, and the contact of the flexible flap against the closing surface will thereby be supported by the force of gravity.

According to the second aspect of the present invention the closing surface is flat, with a directional component corresponding to the direction of the force of gravity and a directional component perpendicularly of the direction of the force of gravity.

Although the closing surface is flat and the flexible flap thereby lies against the closing surface without tension, the closing surface does lie obliquely relative to the vertical, i.e. the direction of the force of gravity, so that each part of the flexible flap is pressed against the closing surface by the force of gravity.

In a further embodiment of the stench trap according to the invention the outflow opening is elongate, and the elongate outflow opening particularly has a length/width ratio of more than 4.

By applying an elongate outflow opening a large throughflow area can be obtained at a small height. An additional advantage is that the full overall height of the stench trap can thereby be kept limited.

In another embodiment of a stench trap according to the invention the peripheral surface comprises a peripheral groove and the seal is a flexible ring, such as an O-ring, which is placed in the peripheral groove.

In yet another embodiment of the stench trap according to the invention the flexible flap is a silicone flap.

The invention further relates to a drain, comprising:
- a housing with an inflow opening and an outflow opening for connection to an outflow pipe, wherein a downward directed wall is arranged around the inflow opening;
- a stench trap according to the invention, wherein the stench trap is arranged in the inflow opening of the drain and wherein the seal of the stench trap seals against the downward directed wall.

The drain according to the invention preferably further comprises a collecting tray with a bottom and walls standing upright along the bottom, wherein an opening is provided in the bottom, which opening connects to the inflow opening of the housing.

Water flowing over a surface can firstly be caught and collected in the collecting tray. The collected water can then flow via the opening in the bottom into the inflow opening of the housing and thereby via the stench trap to the outflow opening of the housing.

Such a drain with collecting tray can be square or elongate in top view, just as in the case of shower drains.

In a preferred embodiment of the drain according to the invention the upper surface of the stench trap protrudes above the bottom of the collecting tray and the drain further comprises at least one filler piece, which filler piece is arranged on the bottom of the collecting tray, adjacently of the stench trap, and wherein the upper surface of the at least one filler piece lies flush with the upper surface of the stench trap.

In usual drains with collecting tray a grating is placed in the collecting tray. It is however a trend to no longer use a grating, but a shaped upper surface over which the water flows and wherein the water flows centrally and directly into the inflow opening of the housing.

The application of filler pieces for instance enables a conventional shower drain with grating to be adapted to the new trend of drains without grating. In addition, the filler piece also makes it possible to place the stench trap higher relative to the inflow opening of the housing, whereby the throughflow is improved and whereby the overall height of the whole drain can be reduced.

These and other features of the invention are further elucidated with reference to the accompanying drawings.
Figure 1 is a perspective view of an embodiment of a stench trap according to the invention.
Figure 2 is a perspective view of an embodiment of a drain according to the invention with a stench trap according to figure 1.
Figure 3 is a side view of the stench trap according to figure 1.
Figure 4 is a cross-sectional view of a second embodiment of the drain according to the invention.
Figure 5 is a side view of a second embodiment of a stench trap according to the invention.

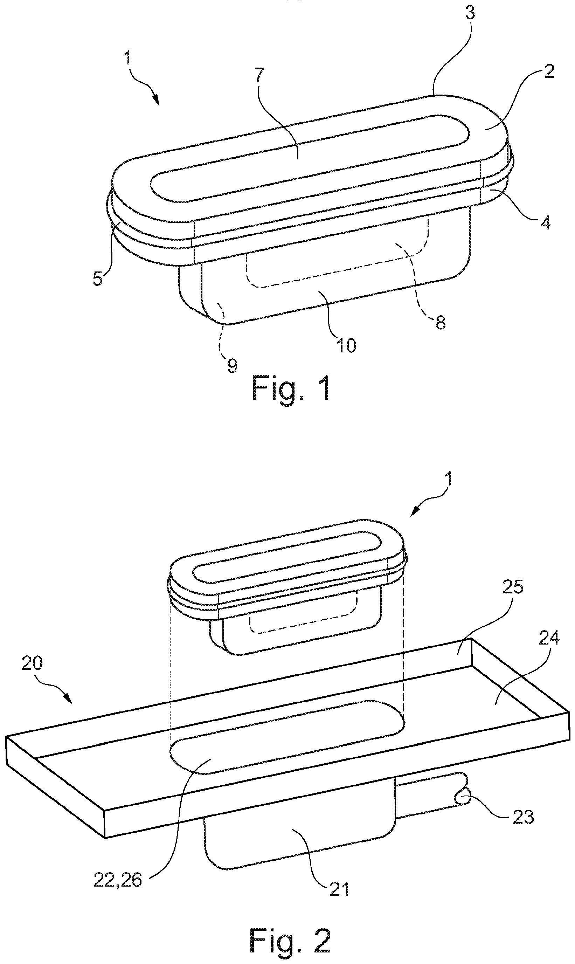

Figure 1 shows an embodiment of a stench trap 1 according to the invention. Stench trap 1 has a body with an upper surface 2 and a peripheral surface 4 directed downward from the peripheral edge 3. Provided in peripheral surface 4 is a peripheral groove with an O-ring 5.

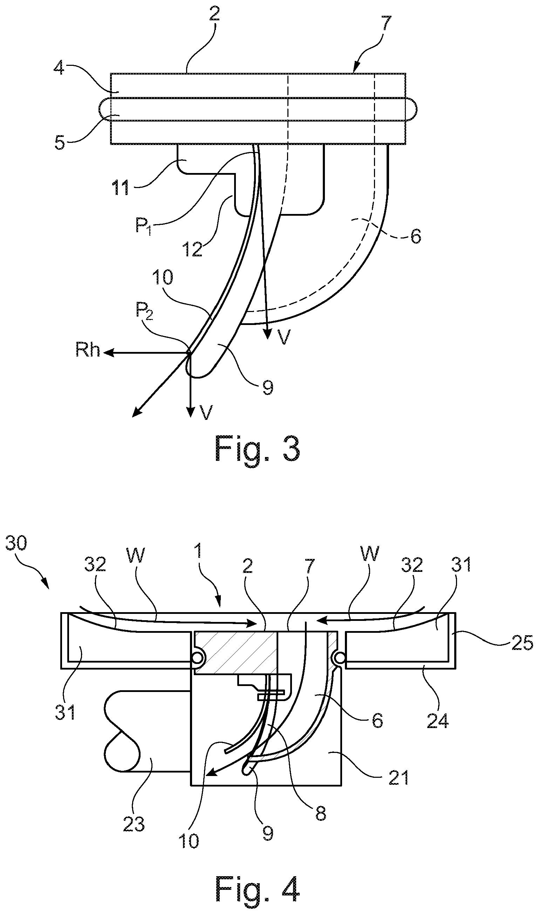

A channel 6 (see figure 3) extends through the body, which channel debouches at a first end in an inflow opening 7 arranged in upper surface 2 and debouches at a second end in an outflow opening 8. Provided around outflow opening 8 is a closing surface 9 against which a flexible flap 10 lies in sealing manner.

Figure 2 shows an embodiment of a drain 20 according to the invention. Drain 20 has a housing 21 with an inflow opening 22 and an outflow opening 23 for connection to an outlet pipe. Placed in inflow opening 22 is a stench trap 1 which seals onto the inner wall of inflow opening 22 with seal 5.

Drain 20 further has a collecting tray with a bottom 24 and a peripheral wall 25 arranged along the periphery. Arranged in the bottom is an opening 26 which connects to inflow opening 22.

Figure 3 shows stench trap 1 in side view. Flexible flap 10 is clamped on the upper side between a part 11, which is clamped against the body with a screw 12.

Flexible flap 10 runs vertically at the position P1 of the clamping. Owing to the curved closing surface 9, flexible flap 10 progresses to a more horizontal position toward the free end P2, wherein closing surface 9 has at least a horizontal directional component Rh.

Figure 4 shows a second embodiment 30 of a drain according to the invention. This second embodiment 30 corresponds partially to the embodiment according to figure 2. The same components are therefore designated with the same reference numerals.

Filler elements 31, which have a curved upper surface 32, are placed in collecting tray 24, 25. This upper surface 32 continues into the upper surface 2 of stench trap 2. Water W, which flows into collecting tray 24, 25, will flow over the curved surface 32 of filler elements 31 to the upper surface 2 of stench trap 1 and to the inflow opening 7 of channel 6.

The water W then passes through channel 6 and presses flexible flap 10 off closing surface 9 at outflow opening 8, whereby the water W finds its way into housing 21 and can then flow via outflow opening 23 to an outlet pipe.

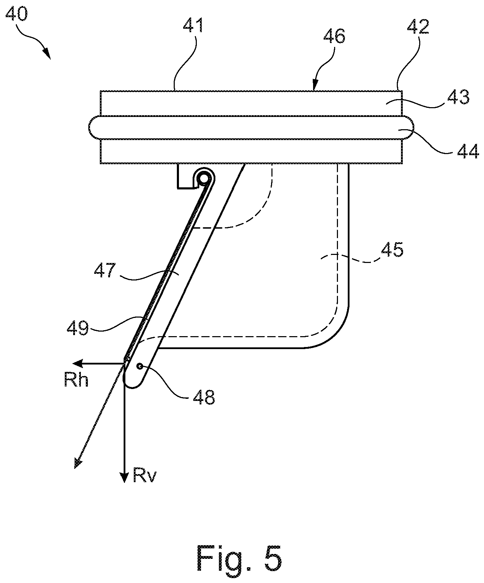

Figure 5 shows a side view of a second embodiment 40 of a stench trap according to the invention. Stench trap 40 has a body with an upper surface 41 and a peripheral surface 43 directed downward from peripheral edge 42. A peripheral groove with an O-ring 44 is provided in peripheral surface 43.

A channel 45, which debouches at a first end in an inflow opening 46 arranged in upper surface 41 and debouches at a second end in an outflow opening 47, extends through the body. Provided around outflow opening 47 is a closing surface 48 against which a flexible flap 49 lies in sealing manner.

In this embodiment 40 the closing surface 48 is flat and has a directional component Rv corresponding to the direction of the force of gravity and a directional component Rh perpendicularly of the direction of the force of gravity. Because of the oblique position of closing surface 48, the whole flexible flap 49 will be pressed against closing surface 48 by the force of gravity, which improves the seal.

## Claims

1. Stench trap (1), comprising:
- a body with an upper surface (2) and a peripheral surface (4) directed downward from the peripheral edge (3) of the upper surface (2);
- a seal (5) arranged substantially parallel to the peripheral edge (3) and enclosing the peripheral surface (4) for the purpose of sealing the peripheral surface (4) against a wall of an outlet pipe or housing in the mounted state of the stench trap.
- a channel (6) extending through the body, wherein the channel debouches at a first end in an inflow opening (7) arranged in the upper surface (2) and debouches at a second end in an outflow opening (8), wherein the outflow opening (8) lies opposite the inflow opening (7) relative to the plane through the seal (5)
- a closing surface (9) which is formed on the body and is arranged all around the outflow opening (8); and
- a flexible flap (10) which is fastened with its edge to the body and lies against the closing surface (9) in order to close the outflow opening (8);
**characterized in that**
the closing surface (9) is a surface with a curve in a single direction, which surface (9) with a curve in a single direction is parallel to the edge with which the flexible flap (10) is fastened to the body, such that the flexible flap (10) will lie against the closing surface (9) by gravity.

2. Stench trap (1) according to claim 1, wherein the closing surface (9) is concave.

3. Stench trap (1) according to any one of the foregoing claims, wherein the closing surface (9) runs substantially vertically close to the edge of the flexible flap (10), which edge is fastened to the body, and wherein the closing surface (9) has at least a horizontal directional component at a greater distance from the edge of the flexible flap (10), which edge is fastened to the body.

4. Stench trap (40), comprising:
- a body with an upper surface (41) and a peripheral surface (43) directed downward from the peripheral edge (42) of the upper surface (41);
- a seal (44) arranged substantially parallel to the peripheral edge and enclosing the peripheral surface (43) for the purpose of sealing the peripheral surface (43) against a wall of an outlet pipe or housing;
- a channel (45) extending through the body, wherein the channel debouches at a first end in an inflow opening (46) arranged in the upper surface (41) and debouches at a second end in an outflow opening (47), wherein the outflow opening (47) lies opposite the inflow opening (46) relative to the plane through the seal (44)
- a closing surface (48) which is formed on the body and is arranged all around the outflow opening (47); and
- a flexible flap (49) which is fastened with an edge to the body and lies against the closing surface (48) in order to close the outflow opening (47);
**characterized in that** the closing surface (48) is flat, with a directional component (Rv) corresponding to the direction of the force of gravity and a directional component (Rh) perpendicularly of the direction of the force of gravity, such that the flexible flap (49) will be pressed against closing surface (48) by the force of gravity.

5. Stench trap (1; 40) according to any one of the foregoing claims, wherein the outflow opening (8; 47) is elongate and particularly has a length/width ratio of more than 4.

6. Stench trap (1; 40) according to any one of the foregoing claims, wherein the peripheral surface (4; 43) comprises a peripheral groove and wherein the seal (5; 44) is a flexible ring, such as an O-ring, which is placed in the peripheral groove.

7. Stench trap (1; 40) according to any one of the foregoing claims, wherein the flexible flap (10; 49) is a silicone flap.

8. Drain (20; 30), comprising:
- a housing (21) with an inflow opening (22) and an outflow opening (23) for connection to an outflow pipe, wherein a downward directed wall is arranged around the inflow opening;
- a stench trap (1) according to any one of the foregoing claims, wherein the stench trap (1) is arranged in the inflow opening (22) of the drain (20) and wherein the seal (5) of the stench trap seals against the downward directed wall.

9. Drain (20; 30) according to claim 8, further comprising a collecting tray with a bottom (24) and walls (25) standing upright along the bottom (24), wherein an opening (26) is provided in the bottom (24), which opening (26) connects to the inflow opening (22) of the housing (21).

10. Drain (30) according to claim 9, wherein the upper surface of the stench trap protrudes above the bottom of the collecting tray (24, 25) and wherein the drain (30) further comprises at least one filler piece (31), which filler piece (31) is arranged on the bottom of the collecting tray (24, 25), adjacently of the stench trap (1), and wherein the upper surface (32) of the at least one filler piece (31) lies flush with the upper surface (2) of the stench trap (1).

## Patentansprüche

1. Geruchsverschluss (1), umfassend:
- einen Körper mit einer oberen Fläche (2) und einer Umfangsfläche (4), die von der Umfangskante (3) der oberen Fläche (2) nach unten gerichtet ist;
- eine Dichtung (5), die im Wesentlichen parallel zu der Umfangskante (3) angeordnet ist und im montierten Zustand des Geruchsverschlusses die Umfangsfläche (4) zwecks Abdichtung der Umfangsfläche (4) gegenüber einer Wand eines Abflussrohrs oder Gehäuses umschließt.
- einen Kanal (6), der sich durch den Körper hindurch erstreckt, wobei der Kanal an einem ersten Ende in einer in der oberen Fläche (2) angeordneten Zulauföffnung (7) mündet und an einem zweiten Ende in einer Ablauföffnung (8) mündet, wobei die Ablauföffnung (8) der Zulauföffnung (7) in Bezug auf die Ebene durch die Dichtung (5) gegenüber liegt,
- eine Verschlussfläche (9), die an dem Körper ausgebildet und vollständig um die Ablauföffnung (8) herum angeordnet ist; und
- eine flexible Klappe (10), die mit ihrer Kante an dem Körper befestigt ist und gegen die Verschlussfläche (9) anliegt, um die Ablauföffnung (8) zu verschließen; **dadurch gekennzeichnet, dass**
- die Verschlussfläche (9) eine Fläche mit einer Krümmung in einer einzigen Richtung ist, wobei die Fläche (9) mit einer Krümmung in eine einzige Richtung parallel zu der Kante ist, mit der die flexible Klappe (10) an dem Körper befestigt ist, so dass die flexible Klappe (10) durch Schwerkraft gegen die Verschlussfläche (9) anliegt.

2. Geruchsverschluss (1) nach Anspruch 1, wobei die Verschlussfläche (9) konkav ist.

3. Geruchsverschluss (1) nach einem der vorhergehenden Ansprüche, wobei die Verschlussfläche (9) nahe der Kante der flexiblen Klappe (10), die an dem Körper befestigt ist, im Wesentlichen vertikal verläuft und wobei die Verschlussfläche (9) in einem größeren Abstand von der Kante der flexiblen Klappe (10), die an dem Körper befestigt ist, mindestens eine horizontale Richtungskomponente aufweist.

4. Geruchsverschluss (40), umfassend:
- einen Körper mit einer oberen Fläche (41) und einer Umfangsfläche (43), die von der Umfangskante (42) der oberen Fläche (41) nach unten gerichtet ist;
- eine Dichtung (44), die im Wesentlichen parallel zu der Umfangskante angeordnet ist und die Umfangsfläche (43) zwecks Abdichtung der Umfangsfläche (43) gegenüber einer Wand eines Abflussrohrs oder Gehäuses umschließt;
- einen Kanal (45), der sich durch den Körper hindurch erstreckt, wobei der Kanal an einem ersten Ende in einer in der oberen Fläche (41) angeordneten Zulauföffnung (46) mündet und an einem zweiten Ende in einer Ablauföffnung (47) mündet, wobei die Ablauföffnung (47) der Zulauföffnung (46) in Bezug auf die Ebene durch die Dichtung (44) gegenüber liegt,
- eine Verschlussfläche (48), die an dem Körper ausgebildet und vollständig um die Ablauföffnung (47) herum angeordnet ist; und
- eine flexible Klappe (49), die mit einer Kante an dem Körper befestigt ist und gegen die Verschlussfläche (48) anliegt, um die Ablauföffnung (47) zu verschließen; **dadurch gekennzeichnet, dass**
- die Verschlussfläche (48) flach mit einer Richtungskomponente (Rv), die der Richtung der Schwerkraft entspricht, und einer Richtungskomponente (Rh) senkrecht zu der Richtung der Schwerkraft ist, so dass die flexible Klappe (49) durch die Schwerkraft gegen die Verschlussfläche (48) gedrückt wird.

5. Geruchsverschluss (1; 40) nach einem der vorhergehenden Ansprüche, wobei die Ablauföffnung (8; 47) langgestreckt ist und insbesondere ein Längen- /Breitenverhältnis von mehr als 4 aufweist.

6. Geruchsverschluss (1; 40) nach einem der vorhergehenden Ansprüche, wobei die Umfangsfläche (4; 43) eine Umfangsnut umfasst und wobei die Dichtung (5; 44) ein flexibler Ring, wie ein O-Ring, ist, der in der Umfangsnut platziert ist.

7. Geruchsverschluss (1; 40) nach einem der vorhergehenden Ansprüche, wobei die flexible Klappe (10; 49) eine Silikonklappe ist.

8. Abfluss (20; 30), umfassend:
- ein Gehäuse (21) mit einer Zulauföffnung (22) und einer Ablauföffnung (23) zum Anschluss an ein Ablaufrohr, wobei eine nach unten gerichtete Wand um die Zulauföffnung herum angeordnet ist; und
- einen Geruchsverschluss (1) nach einem der vorhergehenden Ansprüche, wobei der Geruchsverschluss (1) in der Zulauföffnung (22) des Abflusses (20) angeordnet ist und wobei die Dichtung (5) des Geruchsverschlusses gegen die nach unten gerichtete Wand abdichtet.

9. Abfluss (20; 30) nach Anspruch 8, ferner umfassend eine Sammelrinne mit einem Boden (24) und Wänden (25), die entlang des Bodens (24) aufrecht stehen, wobei eine Öffnung (26) in dem Boden (24) bereitgestellt ist, die mit der Zulauföffnung (22) des Gehäuses (21) verbunden ist.

10. Abfluss (30) nach Anspruch 9, wobei die obere Fläche des Geruchsverschlusses über den Boden der Sammelrinne (24, 25) vorsteht und wobei der Abfluss (30) ferner mindestens ein Füllstück (31) umfasst, das auf dem Boden der Sammelrinne (24, 25) angrenzend an den Geruchsverschluss (1) angeordnet ist, und wobei die obere Fläche (32) des mindestens einen Füllstücks (31) mit der oberen Fläche (2) des Geruchsverschlusses (1) bündig ist.

## Revendications

1. Siphon anti-odeur (1), comprenant :
- un corps ayant une surface supérieure (2) et une surface périphérique (4) orientée vers le bas à partir du bord périphérique (3) de la surface supérieure (2) ;
- un joint (5) disposé sensiblement parallèlement au bord périphérique (3) et entourant la surface périphérique (4) dans le but de sceller la surface périphérique (4) contre une paroi d'un tuyau ou logement de sortie dans l'état monté du siphon anti-odeur ;
- un canal (6) s'étendant à travers le corps, dans lequel le canal débouche à une première extrémité dans une ouverture d'entrée (7) disposée dans la surface supérieure (2) et débouche à une seconde extrémité dans une ouverture de sortie (8), dans lequel l'ouverture de sortie (8) se trouve à l'opposé de l'ouverture d'entrée (7) par rapport au plan traversant le joint (5)
- une surface de fermeture (9) qui est formée sur le corps et est disposée tout autour de l'ouverture de sortie (8) ; et
- un clapet flexible (10) qui est fixé à un bord sur le corps et repose contre la surface de fermeture (9) afin de fermer l'ouverture de sortie (8) ;
**caractérisé en ce que**
la surface de fermeture (9) est une surface ayant une courbe dans une seule direction, laquelle surface (9) ayant une courbe dans une seule direction est parallèle au bord sur lequel le clapet flexible (10) est fixé au corps, de sorte que le clapet flexible (10) repose contre la surface de fermeture (9) par gravité.

2. Siphon anti-odeur (1) selon la revendication 1, dans lequel la surface de fermeture (9) est concave.

3. Siphon anti-odeur (1) selon l'une quelconque des revendications précédentes, dans lequel la surface de fermeture (9) se tient sensiblement verticalement près du bord du clapet flexible (10), lequel bord est fixé au corps, et dans lequel la surface de fermeture (9) a au moins un composant directionnel vertical à une distance plus grande du bord du clapet flexible (10), lequel bord est fixé au corps.

4. Siphon anti-odeur (40), comprenant :
- un corps ayant une surface supérieure (41) et une surface périphérique (43) orientée vers le bas à partir du bord périphérique (42) de la surface supérieure (41) ;
- un joint (44) disposé sensiblement parallèlement au bord périphérique et entourant la surface périphérique (43) dans le but de sceller la surface périphérique (43) contre une paroi d'un tuyau ou logement de sortie ;
- un canal (45) s'étendant à travers le corps, dans lequel le canal débouche à une première extrémité dans une ouverture d'entrée (46) disposée dans la surface supérieure (41) et débouche à une seconde extrémité dans une ouverture de sortie (47), dans lequel l'ouverture de sortie (47) se trouve à l'opposé de l'ouverture d'entrée (46) par rapport au plan traversant le joint (44)
- une surface de fermeture (48) qui est formée sur le corps et est disposée tout autour de l'ouverture de sortie (47) ; et
- un clapet flexible (49) qui est fixé à un bord sur le corps et repose contre la surface de fermeture (48) afin de fermer l'ouverture de sortie (47) ;
**caractérisé en ce que** la surface de fermeture (48) est plate, avec un composant directionnel (Rv) correspondant à la direction de la force de gravité et un composant directionnel (Rh) perpendiculaire à la direction de la force de gravité, de sorte que le clapet flexible (49) est pressé contre la surface de fermeture (48) par la force de gravité.

5. Siphon anti-odeur (1 ; 40) selon l'une quelconque des revendications précédentes, dans lequel l'ouverture de sortie (8 ; 47) est allongée et présente en particulier un rapport longueur/largeur supérieur à 4.

6. Siphon anti-odeur (1 ; 40) selon l'une quelconque des revendications précédentes, dans lequel la surface périphérique (4 ; 43) comprend une rainure périphérique et dans lequel le joint (5 ; 44) est un anneau flexible, tel qu'un joint torique, qui est placé dans la rainure périphérique.

7. Siphon anti-odeur (1 ; 40) selon l'une quelconque des revendications précédentes, dans lequel le clapet flexible (10 ; 49) est un clapet en silicone.

8. Drain (20 ; 30), comprenant :
- un logement (21) comportant une ouverture d'entrée (22) et une ouverture de sortie (23) pour une liaison à un tuyau de sortie, dans lequel une paroi orientée vers le bas est disposée autour de l'ouverture d'entrée ;
- un siphon anti-odeur (1) selon l'une quelconque des revendications précédentes, dans lequel le siphon anti-odeur (1) est disposé dans l'ouverture d'entrée (22) du drain (20) et dans lequel le joint (5) du siphon anti-odeur est scellé contre la paroi orientée vers le bas.

9. Drain (20 ; 30) selon la revendication 8, comprenant en outre un plateau de collecte comportant un fond (24) et des parois (25) s'élevant vers le haut le long du fond (24), dans lequel une ouverture (26) est placée dans le fond (24), laquelle ouverture (26) est reliée à l'ouverture d'entrée (22) du logement (21).

10. Drain (30) selon la revendication 9, dans lequel la surface supérieure du siphon anti-odeur fait saillie au-dessus du fond du plateau de collecte (24, 25) et dans lequel le drain (30) comprend en outre au moins une pièce de remplissage (31), laquelle pièce de remplissage (31) est disposée sur le fond du plateau de collecte (24, 25), adjacente au siphon anti-odeur (1), et dans lequel la surface supérieure (32) de l'au moins une pièce de remplissage (31) est alignée avec la surface supérieure (2) du siphon anti-odeur (1).
